# FASCICULE DE BREVET EUROPEEN

(11) **EP 0 927 623 B1**
(45) Date de publication et mention de la délivrance du brevet: **11.09.2002**
(21) Numéro de dépôt: 98204324.2
(22) Date de dépôt: 17.12.1998
(51) Int. Cl.: B29C 47/00, B29C 69/02, B29C 31/08, B29C 49/42

(54) **Dispositif et procédé de préformage d'une paraison extrudée**
Vorrichtung und Verfahren zum Vorformen eines extrudierten Vorformlings
Apparatus and method of preforming an extruded parison

(30) Priorité: 30.12.1997 FR 9716828
(43) Date de publication de la demande: 07.07.1999
(73) Titulaire: Inergy Automotive Systems Research (SA), 1120 Bruxelles (BE)
(72) Inventeur: van Schaftingen, Jules-Joseph, 1300 Wavre (BE); Dupont, Serge, 1800 Vilvoorde (BE)
(74) Mandataire: Decamps, Alain René François

(56) Documents cités:
- EP-A- 0 256 442
- WO-A-96/28295
- US-A- 4 971 544
- US-A- 5 464 635

## Description

La présente invention concerne un dispositif et un procédé de préformage d'une paraison extrudée permettant la fabrication d'un article moulé de géométrie tridimensionnelle complexe.

On connaît plusieurs procédés de moulage permettant la fabrication d'articles moulés en résine polymérique et ayant une géométrie tridimensionnelle complexe. De tels articles ont par exemple une succession de segments orientés chacun dans une direction différente.

Les applications de tels articles sont multiples. Citons parmi celles-ci, dans le domaine de l'automobile notamment, les tubulures de remplissage pour réservoirs à carburant ou les tuyaux de ventilation ou de transport de fluides divers dont le positionnement et le parcours peuvent être dictés par la géométrie environnante.

Les difficultés rencontrées lors de la fabrication de tels articles résultent de leurs structures spatiales complexes. Il s'agit notamment d'introduire la paraison dans le moule de manière optimale en évitant notamment à la fois les chutes de matière et les étirages locaux excessifs.

Une première solution consiste à déposer directement la paraison dans une des sections du moule ayant son ouverture dirigée vers le haut. Ce procédé nécessite de faire effectuer, soit à ladite section du moule, soit à la tête d'extrusion, un mouvement tridimensionnel complexe selon la forme de l'article à mouler. Les poids des appareillages mis en jeu étant la plupart du temps très imposants, ce procédé n'est guère avantageux, tant des points de vue technique qu'économique.

Afin de remédier à ce problème, plusieurs procédés consistent à préformer la paraison avant de l'introduire dans le moule, c'est-à-dire à lui donner une forme adaptée à la forme de l'empreinte du moule. Grâce à ce préformage, il n'est plus besoin de disposer d'un moule ou d'une tête d'extrusion mobiles. Seul l'appareillage, relativement léger, effectuant le préformage est mobile.

La demande de brevet WO-A1-9628295 décrit un tel procédé . La paraison, destinée à produire un article tubulaire, est déposée sur une bande transporteuse plane et horizontale, actionnée approximativement à la vitesse de l'extrusion. La paraison, après fermeture à une extrémité, présoufflage, fermeture à l'autre extrémité, et arrêt de la bande est ensuite déformée dans le plan horizontal uniquement, à l'aide d'un outil dont deux parties coopèrent pour l'emboutir latéralement. La paraison acquiert ainsi une forme correspondant à la projection dans le plan horizontal de la forme de l'article à réaliser. Après cette étape de préformage selon deux directions, la bande transporteuse est écartée et la paraison est amenée, à l'aide de l'outil de préformage, à la verticale de la section inférieure du moule. Le retrait des deux parties de l'outil de préformage provoque la chute de la paraison dans le moule, qui est ensuite fermé.

Le procédé ci-dessus a l'avantage de ne pas nécessiter de synchronisation précise de la vitesse d'extrusion avec le mouvement de l'appareillage de préformage et permet aussi bien l'utilisation d'une tête d'extrusion verticale que d'une tête horizontale. Cependant, il comporte encore certains inconvénients. Un des problèmes majeurs réside dans le fait que le préformage n'est effectué que selon les deux directions du plan de la bande transporteuse. L'empreinte du moule comportant généralement des segments à orientation hors de ce plan, ces segments peuvent, lors de l'introduction de la préforme dans le moule, conduire à des déformations importantes et non uniformes de la matière avant moulage, et donc, par exemple, à un manque d'uniformité des épaisseurs de parois. Un autre inconvénient réside dans le fait que la préforme, nécessairement contenue dans un plan avant dépose dans le moule, doit être lâchée d'une certaine hauteur, hauteur d'autant plus importante et non uniforme que l'article à réaliser possède une forte composante hors de ce plan. Cette hauteur de chute importante conduit inévitablement à un positionnement moins précis de la préforme dans le moule, et donc à des articles aux caractéristiques moins reproductibles.

La présente invention a dès lors pour objet un dispositif permettant un préformage aisé à mettre en oeuvre et ne comportant pas les inconvénients précités.

Dès lors, l'invention concerne un dispositif de préformage d'une paraison extrudée en matière plastique sur une bande transporteuse qui se caractérise en ce que la bande transporteuse est non plane.

Dans le cadre de la présente invention, on entend par préformage toute opération ou suite d'opérations destinée à modifier la géométrie de la paraison, entre le moment où elle est extrudée et le moment où elle est introduite dans un outil de moulage.

Toute matière plastique peut être utilisée pour la réalisation de la paraison utilisée dans le cadre de l'invention. Il peut aussi bien s'agir de résine thermodurcissable que de résine thermoplastique. De préférence, la paraison est essentiellement constituée de résine thermoplastique. Ladite résine thermoplastique peut comprendre un ou plusieurs polymères. Ces polymères peuvent comprendre des homopolymères, des copolymères ou leurs mélanges. De manière préférée, le polymère est une polyoléfine. De manière davantage préférée, la polyoléfine est un polyéthylène. D'excellents résultats ont été obtenus avec du polyéthylène de haute densité.

La matière plastique peut en outre contenir tout additif usuel adéquat, notamment des charges, matières de renforcement, stabilisants, lubrifiants, ou des combinaisons de ces additifs.

La paraison peut être aussi bien être monocouche que multicouche.

Elle peut également être pleine ou posséder une âme creuse.

Dans le cas d'une paraison multicouche avec une âme creuse, une des couches peut être, par exemple, composée d'une résine présentant un effet barrière choisi en fonction de l'application envisagée.

L'extrusion de la paraison peut être réalisée selon toute technique connue de l'homme du métier. L'extrusion peut notamment être continue, discontinue, avec emploi d'une chambre d'accumulation, ou séquentielle. La tête d'extrusion peut être horizontale ou verticale. L'extrusion peut également être réalisée selon des paramètres constants ou programmables au cours du temps.

Dans le cas d'une programmation des paramètres d'extrusion, il est notamment avantageux de pouvoir faire varier la section de la paraison et/ou, le cas échéant, les épaisseurs des différentes couches.

De très bons résultats ont été obtenus en extrusion continue, avec une tête d'extrusion approximativement horizontale et, de préférence, une programmation au cours du temps de l'épaisseur de la paroi de la paraison.

La bande transporteuse utilisée peut adopter toute configuration connue de l'homme du métier, à condition qu'au moins une partie de la surface de celle-ci. destinée à recevoir la paraison, ne soit pas plane; c'est-à-dire que le profil longitudinal de la bande transporteuse, entre son support le plus en amont et son support le plus en aval, ne soit pas approximativement rectiligne.

Dans le présent contexte, on qualifie d'approximativement rectiligne un profil dont aucun point ne s'écarte, par rapport au segment de droite reliant tangentiellement les supports aux extrémités amont et aval, de plus de 2 % de la longueur de ce segment, et de préférence pas plus de 1 % (en ne tenant donc pas compte de la courbure éventuelle de la bande transporteuse due à ces supports).

L'invention donne de très bons résultats lorsque cet écart est de plus de 10 % et en particulier de plus de 20 %. Le profil peut être de toute géométrie possible, mais se rapprochera de préférence du profil correspondant de l'empreinte du moule. Un tel profil peut comporter, par exemple, plusieurs plans et/ou une ou plusieurs courbes. Cette disposition non plane permet de minimiser, lors de l'introduction de la paraison dans le moule, à la fois les étirements imposés à ladite paraison et la hauteur de chute de celle-ci.

Toute technique connue de l'homme du métier peut être employée pour créer le profil longitudinal souhaité pour la bande transporteuse. La technique la plus simple consiste à faire passer la bande transporteuse, entre ses deux extrémités, sur un ou plusieurs supports transversaux intermédiaires, continus ou discrets (cylindres rotatifs par exemple) sortant du plan défini par les supports des extrémités. D'autres techniques font par exemple appel à des séries de galets latéraux.

La matière constituant la bande transporteuse peut être de toute nature compatible avec le matériau et la température de la paraison. Cette matière sera de préférence choisie, de manière connue, afin de limiter les risques d'adhésion de la paraison sur sa surface.

La bande transporteuse est souvent une bande sans fin. Alternativement, il peut par exemple s'agir d'une bande se déroulant d'un mandrin pour aller s'enrouler sur un autre mandrin.

Un des principaux champs d'application du dispositif de préformage conforme à l'invention est la réalisation d'articles tridimensionnels. Le dispositif selon l'invention comprend donc en outre au moins un outil de préformage transversal de la paraison.

Cet outil peut être de toute nature connue de l'homme du métier. Il peut s'agir, par exemple, de gabarits venant pincer latéralement la paraison.

De manière avantageuse, au moins un outil de préformage transversal épouse au moins en partie le profil longitudinal de la bande transporteuse. De préférence, au moins un outil de préformage est non plan. De manière particulièrement avantageuse, au moins un outil de préformage est non plan et épouse au moins en partie le profil longitudinal de la bande transporteuse.

De manière également avantageuse, l'outil de préformage transversal de la paraison comprend un dispositif lui permettant de supporter et de transporter la paraison, une fois préformée. L'outil de préformage transversal constitue également, dans ce cas, une pince de transfert et de positionnement de la paraison dans un outil de moulage. Un tel dispositif peut être de toute nature compatible avec l'outil de préformage transversal.

Un exemple particulier de dispositif utilisable comprend un rebord en saillie (continu ou non) le long de l'arête inférieure de chacune des deux parties de l'outil de préformage transversal. Chaque rebord étant dirigé vers l'autre partie de l'outil de préformage transversal, les deux rebords coopèrent pour soutenir la paraison lorsque lesdites parties sont en position de rapprochement maximum. Dans ce cas, après transport de ladite paraison et positionnement au dessus de l'outil de moulage, il suffit d'écarter suffisamment les deux parties de l'outil de préformage transversal pour libérer la paraison, qui tombe alors directement dans l'outil de moulage.

Une autre dispositif utilisable comprend un rebord inférieur escamotable relié à une des parties de l'outil de préformage transversal.

Afin de ne pas refroidir prématurément la paraison, le dispositif de préformage peut éventuellement être chauffé, en tout ou en partie.

Le dispositif décrit ci-dessus permet de réaliser aisément un procédé de préformage ne présentant pas les inconvénients des procédés classiques.

Dès lors, l'invention concerne aussi un procédé de préformage d'une paraison extrudée en matière plastique comprenant une étape pendant laquelle la paraison est déposée sur une bande transporteuse, et qui se caractérise en ce que la surface de ladite bande transporteuse n'est pas plane.

Le procédé de préformage conforme à l'invention s'applique plus particulièrement à la réalisation d'articles tridimensionnels. L'étape pendant laquelle la paraison est déposée sur la bande transporteuse, et effectuant le préformage de la paraison selon le profil longitudinal, est donc accompagnée de préférence d'une étape de préformage transversal au moyen d'au moins un outil.

Cet outil peut être de toute nature connue de l'homme du métier. Il peut s'agir, par exemple, de gabarits venant pincer latéralement la paraison.

De manière avantageuse, au moins un outil de préformage transversal épouse au moins en partie le profil longitudinal de la bande transporteuse. De manière également avantageuse, au moins un outil de préformage est non plan. De manière particulièrement avantageuse, au moins un outil de préformage est non plan et épouse au moins en partie le profil longitudinal de la bande transporteuse.

En ce qui concerne les autres caractéristiques du procédé de préformage conforme à l'invention, on se rapportera aux différentes caractéristiques correspondantes du dispositif selon l'invention.

Le procédé de préformage conforme à l'invention permet la fabrication d'articles aux propriétés améliorées, notamment grâce à un meilleur contrôle des déformations de la paraison lors de son introduction dans le moule.

Dès lors, l'invention concerne également un procédé de fabrication d'au moins un article, comprenant une étape d'extrusion d'une paraison en matière plastique et une étape de moulage de ladite paraison, caractérisé en ce qu'il comprend en outre une étape de préformage selon le procédé décrit ci-dessus.

Le moulage peut être de toute nature. Il peut s'agir par exemple de moulage simple ou, dans le cas d'une paraison avec une âme creuse, de moulage par soufflage.

L'article concerné peut être de toute nature. Il peut s'agir par exemple d'un corps creux ou d'un corps plein. Dans le cas d'un corps creux, il s'agit de préférence d'un conduit tubulaire, par exemple pour le transport de gaz ou de liquides divers. De façon davantage préférée, le conduit tubulaire est une tubulure de remplissage pour réservoir à carburant.

Dans le cadre du procédé de fabrication conforme à l'invention, il est possible, afin d'optimiser à la fois la cadence de production et l'utilisation des différents outils, d'utiliser soit plusieurs dispositifs de préformage et un outil de moulage, soit un dispositif de préformage et plusieurs outils de moulage, soit enfin plusieurs dispositifs de préformage et plusieurs outils de moulage. De préférence, on utilise un dispositif de préformage et plusieurs outils de moulage.

On voit qu'il est donc possible de fabriquer simultanément plusieurs articles différents, avec des moules différents, dans le cas ou plusieurs outils de moulage coexistent.

Comme dans le dispositif conforme à l'invention décrit précédemment, le procédé de fabrication conforme à l'invention peut également comprendre le transfert et le positionnement de la paraison dans l'outil de moulage. On définit ici ce transfert comme étant un mouvement relatif, de la bande transporteuse et/ou de l'outil de préformage transversal et/ou de l'outil de moulage.

De préférence, ce transfert et ce positionnement sont effectués par mouvement de l'outil de préformage transversal.

Le dispositif et le procédé de préformage conformes a l'invention sont explicités et illustrés, de manière non limitative, par les figures suivantes.
La figure 1 représente schématiquement une partie du dispositif selon un exemple de réalisation de l'invention, dans une configuration utilisée pour la réalisation d'une première étape du procédé. Le système d'axes de référence employé y est également indiqué.
La figure 2 illustre le même dispositif lors d'une étape ultérieure du procédé.
La figure 2a est une vue détaillée d'une coupe selon AA' de la figure 2.
La figure 3 illustre une étape encore ultérieure.

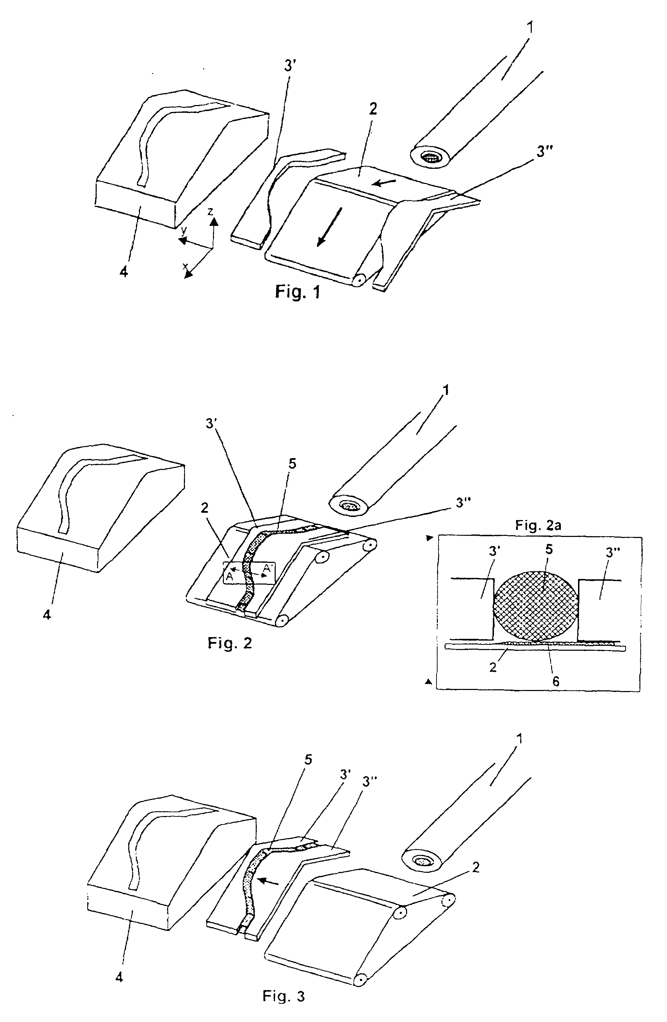

Considérant la figure 1, montrant l'appareillage à une étape précédant l'extrusion de la paraison, on y voit une tête d'extrusion (1), dont l'axe est contenu dans le plan xz. La filière de cette tête d'extrusion est disposée au dessus d'une première extrémité d'une bande transporteuse (2). La bande transporteuse est dans ce cas-ci une bande sans fin dont la surface supérieure adopte un profil longitudinal (selon l'axe x du plan xz) d'abord ascendant, puis descendant.

Les deux parties (3',3'') d'un outil de préformage transversal de la paraison sont écartées afin de dégager la bande transporteuse. Cet outil de préformage transversal s'étend ici d'une extrémité à l'autre de la bande transporteuse (selon l'axe x) et possède un profil longitudinal épousant le profil longitudinal de la bande transporteuse. Lorsque l'outil de préformage transversal est déplacé au dessus de la bande transporteuse, sa surface inférieure vient donc en tout point à proximité immédiate de la surface supérieure de la bande transporteuse.

Dans le cas présent, l'outil de préformage transversal est constitué principalement d'une paire de plaques d'une seule pièce et de profils transversaux complémentaires, choisis en fonction du profil transversal souhaité pour la préforme.

L'outil de moulage, ici représenté par la section inférieure (4) d'un moule, est disposé plus loin dans la direction de l'axe y.

La bande transporteuse est actionnée afin de faire avancer sa surface supérieure dans la direction de l'axe x. La paraison (5) est extrudée et déposée sur la surface de la bande transporteuse en mouvement. La bande transporteuse conduit donc la paraison dans la direction de l'axe x, tout en lui imposant le profil longitudinal défini par le profil longitudinal de la surface supérieure de la bande transporteuse. Lorsque l'extrémité de la paraison atteint l'extrémité opposée de la bande transporteuse (ou éventuellement tout point préalablement défini avant cette extrémité), la bande transporteuse est arrêtée et la paraison est sectionnée au niveau de la filière (par un appareillage non illustré).

Les deux parties (3',3") de l'outil de préformage transversal de la paraison se dirigent ensuite l'une vers l'autre (selon la direction de l'axe y) et viennent déformer transversalement la paraison, en lui imposant le profil dont elles sont munies.

L'outil de préformage transversal est muni, sur une de ses deux parties (3") d'un mince rebord inférieur en saillie (6, voir fig. 2a) venant s'intercaler, tout au long de la paraison et lors du rapprochement maximum des deux parties (3' et 3"), entre la paraison et la bande transporteuse. A ce stade, la paraison préformée est donc maintenue latéralement par les deux parties de l'outil de préformage transversal et maintenue vers le bas au moyen du rebord en saillie. Cette étape est illustrée par les figures 2 et 2a.

L'outil de préformage transversal, maintenant la paraison préformée, est ensuite déplacé latéralement (selon la direction de l'axe y), en transférant la préforme vers l'outil de moulage. Cette étape est illustrée par la figure 3.

Lorsque la préforme est positionnée à la verticale de l'empreinte du moule, elle est libérée, ici par un mouvement de retrait du rebord (6), au moyen d'un mécanisme approprié non illustré ici. Etant donné que le profil longitudinal de la préforme correspond au profil longitudinal de l'outil de préformage transversal, lui-même choisi en fonction du profil longitudinal de l'empreinte du moule, l'outil de préformage transversal peut approcher de très près la surface supérieure de la section inférieure (4) du moule, permettant un positionnement très précis et reproductible de la préforme dans cette section du moule. Le moule est ensuite refermé au moyen de la section complémentaire, et le moulage est opéré.

## Revendications

1. Dispositif de préformage d'une paraison extrudée (5) en matière plastique comprenant une bande transporteuse (2) **caractérisé en ce que** la bande transporteuse (2) est non plane.

2. Dispositif selon la revendication précédente, comprenant en outre au moins un outil (3',3") de préformage transversal de la paraison (5).

3. Dispositif selon la revendication 2, dans lequel au moins un outil de préformage transversal (3',3") est non plan et épouse au moins en partie le profil longitudinal de la bande transporteuse (2).

4. Dispositif selon une quelconque des revendications 2 ou 3, dans lequel l'outil de préformage transversal (3',3") constitue aussi une pince de transfert et de positionnement de la paraison (5) dans un outil de moulage (4).

5. Procédé de préformage d'une paraison extrudée en matière plastique comprenant une étape pendant laquelle la paraison (5) est déposée sur une bande transporteuse (2), **caractérisé en ce qu'**on effectue le dépôt sur une bande transporteuse (2) dont la surface n'est pas plane.

6. Procédé de préformage selon la revendication 5, dans lequel l'étape pendant laquelle la paraison (5) est déposée sur la bande transporteuse (2) est accompagnée d'une étape de préformage transversal de ladite paraison (5) au moyen d'au moins un outil (3',3").

7. Procédé de préformage selon la revendication 6, dans lequel on met en oeuvre au moins un outil de préformage transversal (3',3") non plan et qui épouse au moins en partie le profil longitudinal de la bande transporteuse (2).

8. Utilisation du procédé de préformage d'une paraison extrudée (5) selon une quelconque des revendications 5 à 7 pour fabriquer au moins un article en matière plastique, **caractérisé en ce qu'**on fait suivre le préformage d'une étape de moulage de la paraison préformée.

9. Utilisation du procédé de préformage selon la revendication précédente dans laquelle on met en oeuvre au moins un dispositif de préformage et au moins un outil de moulage.

10. Utilisation du procédé de préformage d'une paraison extrudée (5) selon une quelconque des revendications 8 ou 9, dans laquelle le transfert et le positionnement de la paraison (5) dans l'outil de moulage sont effectués au moyen de l'outil de préformage transversal. (3',3").

11. Utilisation du procédé de préformage d'une paraison extrudée (5) selon une quelconque des revendications 8 à 10 pour la fabrication d'une tubulure de remplissage pour réservoir à carburant.

## Patentansprüche

1. Vorrichtung zum Vorformen eines extrudierten Vorformlings (5) aus Kunststoffmaterial, umfassend ein Transportband (2), **dadurch gekennzeichnet, dass** das Transportband (2) nicht eben ist.

2. Vorrichtung nach dem vorangehenden Anspruch, umfassend außerdem mindestens ein Werkzeug (3',3'') zum Quervorformen des Vorformlings (5).

3. Vorrichtung nach Anspruch 2, bei der mindestens ein Quervorformwerkzeug (3',3") nicht eben ist und sich mindestens teilweise an das Längsprofil des Transportbandes (2) anschmiegt.

4. Vorrichtung nach einem der Ansprüche 2 oder 3, bei der das Quervorformwerkzeug (3',3'') auch eine Zange zum Überführen und zum Positionieren des Vorformlings (5) in einem Formwerkzeug (4) bildet.

5. Verfahren zum Vorformen eines extrudierten Vorformlings aus Kunststoffmaterial, umfassend einen Schritt, während dem der Vorformling (5) auf einem Transportband (2) abgelegt wird, **dadurch gekennzeichnet, dass** man die Ablage auf einem Transportband (2) ausführt, dessen Oberfläche nicht eben ist.

6. Vorformverfahren nach Anspruch 5, bei dem der Schritt, während dem der Vorformling (5) auf dem Transportband (2) abgelegt wird, von einem Schritt eines Quervorformens des Vorformlings (5) mit Hilfe von mindestens einem Werkzeug (3',3'') begleitet wird.

7. Vorformverfahren nach Anspruch 6, bei dem man mindestens ein Quervorformwerkzeug (3',3") benutzt, das nicht eben ist und das sich mindestens teilweise an das Längsprofil des Transportbandes (2) anschmiegt.

8. Verwendung des Verfahrens zum Vorformen eines extrudierten Vorformlings (5) nach einem der Ansprüche 5 bis 7 zum Herstellen von mindestens einem Gegenstand aus Kunststoff, **dadurch gekennzeichnet, dass** man dem Vorformen einen Schritt eines Formens des vorgeformten Vorformlings folgen lässt.

9. Verwendung des Vorformverfahrens nach dem vorangehenden Anspruch, bei der man mindestens eine Vorformvorrichtung und mindestens ein Formwerkzeug benutzt.

10. Verwendung des Verfahrens zum Vorformen eines extrudierten Vorformlings (5) nach einem der Ansprüche 8 oder 9, bei der die Überführung und die Positionierung des Vorformlings (5) im Formwerkzeug mit Hilfe des Quervorformwerkzeugs (3',3'') ausgeführt werden.

11. Verwendung des Verfahrens zum Vorformen eines extrudierten Vorformlings (5) nach einem der Ansprüche 8 bis 10 zur Herstellung eines Einfüllstutzens für einen Kraftstofftank.

## Claims

1. System for preforming an extruded plastics parison (5) comprising a conveyor belt (2), **characterized in that** the conveyor belt (2) is not planar.

2. System according to the previous claim, comprising in addition at least one transverse parison-preforming tool (3', 3").

3. System according to claim 2, in which at least one transverse preforming tool (3', 3") is nonplanar and conforms at least partly to the longitudinal profile of the conveyor belt (2).

4. System according to either of claims 2 and 3, in which the transverse preforming tool (3', 3") also constitutes a clamp for transferring the parison (5) to and positioning it in a moulding tool (4).

5. Method of preforming an extruded plastics parison, comprising a step during which the parison (5) is deposited on a conveyor belt (2), **characterized in that** the surface of the said conveyor belt (2) is not planar.

6. Preforming method according to claim 5, in which the step during which the parison (5) is deposited on the conveyor belt (2) is accompanied by a step of transverse preforming of the said parison (5) by means of at least one tool (3', 3").

7. Preforming method according to claim 6, in which at least one transverse preforming tool (3', 3") is nonplanar and conforms at least partly to the longitudinal profile of the conveyor belt (2).

8. Use of the preforming method of an extruded parison (5) according to any one of claims 5 to 7 for the manufacture of at least one article made of plastic, **characterized in that** a step of moulding of the parison (5) follows the preforming step.

9. Use of the preforming method according to the previous claim, in which there is used at least one preforming tool (3', 3") and at least one moulding tool.

10. Use of the preforming method of an extruded parison (5) according to either of claims 8 and 9, in which the transfer of the parison (5) to the moulding tool and its positioning therein are carried out by the transverse preforming tool (3' , 3").

11. Use of the preforming method of an extruded parison (5) according to. any one of claims 8 to 10 for the manufacture of a filling nozzle for a fuel tank.
